(19) Europäisches Patentamt
European Patent Office
Office européen des brevets

(11) EP 0 867 460 B1

(12) **EUROPÄISCHE PATENTSCHRIFT**

(45) Veröffentlichungstag und Bekanntmachung des Hinweises auf die Patenterteilung:
**14.06.2000 Patentblatt 2000/24**

(51) Int Cl.[7]: **C08G 77/46**

(21) Anmeldenummer: **98104568.5**

(22) Anmeldetag: **13.03.1998**

(54) **Polysiloxan-Polyoxyalkylen-Blockcopolymere**

Polysiloxane-polyoxyalkylene block copolymers

Polymères segmentés de polysiloxane-polyoxyalkylène

(84) Benannte Vertragsstaaten:
**DE FR GB IT NL**

(30) Priorität: **26.03.1997 DE 19712629**

(43) Veröffentlichungstag der Anmeldung:
**30.09.1998 Patentblatt 1998/40**

(73) Patentinhaber: **Goldschmidt AG**
**45127 Essen (DE)**

(72) Erfinder:
- **Boinowitz, Tammo, Dr.**
  **45131 Essen (DE)**
- **Burkhart, Georg, Dr.**
  **45239 Essen (DE)**
- **Langenhagen, Rolf-Dieter**
  **45529 Hattingen (DE)**
- **Weier, Andreas, Dr.**
  **45289 Essen (DE)**

(56) Entgegenhaltungen:
**DE-A- 4 229 402** **DE-A- 4 407 189**
**US-A- 5 032 662** **US-A- 5 357 018**

EP 0 867 460 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Polysiloxan-Polyether-Blockmischpolymere und ihre Verwendung als tensidisch wirksame Substanzen.

Polyoxyalkylen-Polysiloxan-Blockmischpolymere (im folgenden als Polyethersiloxane bezeichnet) haben einen weiten Anwendungsbereich gefunden. Derartige Substanzen werden als Tenside, Emulgiermittel, Dispergiermittel, Lackverlaufsadditive, Schmiermittel, Entschäumer, als Hilfsmittel bei der tertiären Erdölförderung, als Schaumstabilisatoren bei der Polyurethanverschäumung, als Textilhilfsmittel zum Avivieren von Fasern, Garnen oder flächigen Textilprodukten und zur Hydrophilierung von sanitären Erzeugnissen aus Zellulosefasern sowie für viele andere Zwecke eingesetzt. Derartige Polyethersiloxane sind deshalb so vielseitig brauchbar, da man ihre Eigenschaften, insbesondere ihre Hydrophil/Hydrophob-Balance, durch geeignete Wahl des Siloxanblockes (oder der Siloxanblöcke im Falle von gemischten Verbindungen) beeinflussen und auf einen gewünschten optimalen Wert einstellen kann. So kann der Siloxanblock linear oder verzweigt sein, wobei die absolute Anzahl der difunktionellen und trifunktionellen Siloxy-Einheiten und ihr Zahlenverhältnis zueinander in weiten Grenzen schwanken können.

Vorhersagen über Wirksamkeit von Polysiloxan-Polyoxyalkylen-Blockmischpolymeren als oberflächenaktive Substanzen hängen sehr von den unterschiedlichen Anwendungen ab und können z. B. bei Verwendung als Schaumstabilisator nur in sehr geringem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Entwicklung entsprechender Blockmischpolymere eine fortschrittsraffende und somit erfinderische Leistung dar.

Es ist außerdem möglich, außer den Polyetherblöcken andere modifizierende Gruppen an ein Siliciumatom zu binden. Beispiele solcher Reste sind langkettige Kohlenwasserstoffe mit bis zu 30 Kohlenstoffatomen, mit Halogenatomen, Cyanogruppen oder polaren Resten substituierte Kohlenwasserstoffreste, Hydroxylgruppen etc.

So betrifft die GB-B-2 173 510 ein Verfahren zum Entschäumen von Dieselkraftstoff oder Jetfuel, wobei dem Kraftstoff ein auf einem Siliconpolyethercopolymer mit hohem Ethylenoxidgehalt beruhendes Antischaummittel zugegeben wird. Zusätzlich werden im Kraftstoffbereich auch Additivpakete dem rohen Dieselöl zu seiner Eigenschaftsverbesserung zugesetzt. Unter Additivpaketen versteht man Mischungen verschiedener Zusatzstoffe, wie z. B. Mittel zur Verbesserung des Verbrennungsverhaltens, Mittel zur Verminderung der Rauchbildung, Mittel zur Verringerung der Bildung schädlicher Abgase, Inhibitoren zur Verringerung der Korrosion im Motor und seinen Teilen und ganz allgemein grenzflächenaktive Substanzen, Schmiermittel und dergleichen. Derartige Additivpakete sind z. B. in der GB-A-2 248 068 und in der Zeitschrift Mineralöltechnik 37 (4), S. 20 ff. beschrieben.

Polysiloxan-Polyoxyalkylen-Blockmischpolymere, welche im durchschnittlichen Molekül unterschiedliche Polyoxyalkylenreste aufweisen, sind bereits wiederholt beschrieben worden. Aus der großen Anzahl entsprechender Veröffentlichungen sollen stellvertretend die folgenden Schriften genannt werden:

In der DE-A-44 07 189 wird z. B. gezeigt, daß derartige Polysiloxan-Polyoxyalkylen-Blockmischpolymerisate mit unterschiedlichen Polyoxyalkylenresten sowie Kohlenwasserstoffsubstituenten mit 6 bis 30 Kohlenstoffatomen am Siloxan als Zusatzmittel für Haarkosmetika, insbesondere für Haarshampoos, zur Verbesserung des Griffes und der Kämmbarkeit des Haares benutzt werden.

Die DE-A-40 11 942 beschreibt Polysiloxan-Polyoxyalkylen-Blockmischpolymerisate mit durch Ringöffnungspolymerisation erhaltene Polyestergruppen eines mittleren Molekulargewichtes von 200 bis 100 000 in den Polyetherseitenketten, die als Beschichtungsmittel und zum Auftrag von Farbanstrichen benutzt werden.

Die DE-C-43 43 185 beschreibt die Verwendung von Siliconpolyethercopolymeren mit hohen Anteilen an Oxypropylengruppen als Komponente von Entschäumeremulsionen auf der Basis organofunktionell modifizierter Polysiloxane.

Gemäß DE-C-16 94 366 werden als Schaumstabilisatoren solche Polysiloxan-Polyoxyalkylen-Blockmischpolymere verwendet, deren Polysiloxanblock in an sich bekannter Weise aufgebaut ist, deren Polyoxyalkylenblock jedoch aus 25 bis 70 Gew.-% eines Polyoxyalkylens mit einem durchschnittlichen Molekulargewicht von 1600 bis 4000 und einem Ethylenoxidgehalt von 20 bis 100 Gew.-%, Rest Propylenoxid und gegebenenfalls höhere Alkylenoxide, und 30 bis 75 Gew.-% eines Polyoxyalkylens mit einem durchschnittlichen Molekulargewicht von 400 bis 1200 und einem Ethylenoxidgehalt von 65 bis 100 Gew.-%, Rest Propylenoxid und gegebenenfalls höhere Alkylenoxide, besteht.

In der DE-A-25 41 865 werden die Polysiloxan-Polyoxyalkylen-Blockmischpolymerisate bezüglich ihrer Polyoxyalkylenblöcke so definiert, daß der eine Polyoxyalkylenblock ein mittleres Molgewicht von 900 bis 1300 hat und zu 30 bis 55 Gew.-% aus Ethylenoxid, Rest Propylenoxid, und der andere Polyoxyalkylenblock ein mittleres Molgewicht von 3800 bis 5000 hat und zu 30 bis 5C Gew.-% aus Etylenoxid, Rest Propylenoxid, besteht.

Das in der EP-A-0 275 563 beschriebene Blockmischpolymerisat umfaßt drei verschiedene Polyoxyalkylenblöcke, nämlich einen Block, welcher 20 bis 60 Gew.-% Oxyethyleneinheiten enthält, bei einem Molgewicht von 3000 bis 5500, einen weiteren Block mit 20 bis 60 Gew.-% Oxyethyleneinheiten und einem Molgewicht von 800 bis 2900 und einen dritten Block nur aus Polyoxypropyleneinheiten und einem Molgewicht von 130 bis 1200.

Auch in US-A-5 357 018 ist gezeigt, daß die Kombination von sehr unterschiedlichen Polyetherblöcken in einem gleichen Molekül möglich ist. Jeder Polyoxyalkylenblock kann aus verschiedenen Oxyalkyleneinheiten, vornehmlich Oxyethylen-, Oxypropylen- und Oxybutyleneinheiten zusammengesetzt sein.

Von Bedeutung ist auch die Endgruppe des Polyoxyalkylenblockes, die reaktiv (z. B. OH-Gruppe) oder inert (z. B. Alkyoxy-Gruppe) sein kann. In DE-C-15 70 647 werden Chlorpolysiloxanylsulfate mit Gemischen von Alkylenoxidaddukten umgesetzt, welche aus 50 bis 95 OH-Equivalentprozent Polyalkylenglykolmonoethern, die aus Ethylenoxid- und Propylenoxideinheiten bestehen und einen Gehalt von 40 bis 70 Gew.-% Oxypropyleneinheiten und ein Molgewicht von 1000 bis 3000 aufweisen, deren Hydroxylgruppen vorzugsweise sekundär sind, und 5 bis 50 OH-Equivalentprozent Alkylenoxidaddukten mehrwertiger Hydroxylverbindungen eines Molekulargewichts von 130 bis 3500 bestehen, deren Polyalkylenglykolkomponente aus Ethylenoxid- und/oder Propylenoxideinheiten bestehen und die ein OH-Equivalentgewicht bis zu 1750 haben und deren Hydroxylgruppen vorzugsweise sekundär sind, wobei die Mengenverhältnisse so gewählt sind, daß auf ein Säureequivalent des Chlorpolysiloxanylsulfates höchstens 1,4, vorzugsweise 1,05 bis 1,2 OH-Equivalente kommen.

Derartige Polyethersiloxane können entsprechend dem Stand der Technik auf verschiedene Weise hergestellt werden. Sc können z. B. nach DE-C-10 12 602 Polyethermono- oder -diole in Gegenwart eines Lösungsmittels und eines Katalysators mit Polysiloxanen umgesetzt werden, welche endständig SiO-Alkylgruppen aufweisen, wobei der freigesetzte aliphatische Alkohol aus dem Reaktionsgemisch abdestilliert wird. Es handelt sich somit um eine Umesterung. Auch die Umsetzung von OH-haltigen Polyethern (Polyethermonoolen) mit äquilibrierten Siloxangemischen der allgemeinen Formel $R_xSiO_y(SO_4)_zX_{4-(z+x+2y)}$ (R = beliebige einwertige Kohlenwasserstoffreste; X = Halogen oder Alkoxyreste; x = 0,9 bis 2,2; y = 0,75 bis 1,75; z = 0,001 bis 0,5; 4 > (z + x + 2y) > 2) ist bekannt. Die bei der Reaktion freiwerdenden Säuren werden neutralisiert, das Reaktionsprodukt wird filtriert und vom Lösungsmittel befreit. Eine derartige Vorgehensweise ist z. B. beschrieben in DE-C-17 95 557. Bei beiden Verfahren werden Polyethersiloxane erhalten, bei denen die Polyethergruppe(n) mit dem Siloxangerüst über eine SiOC-Brücke verbunden ist (sind).

Auch die Herstellung von Si-C-gebundenen Siliconpolyethercopolymeren durch Hydrosilylierung mit unterschiedlichsten Katalysatorsystemen ist lange bekannt. Es zeigt sich aber, daß trotz der Vielfalt der variablen Strukturparameter (Kettenlänge des Siloxans, Zahl und Stellung der Polyalkylenoxidcopolymereinheiten, Länge der verwendeten Polyalkylenoxidcopolymeren, ihre Endgruppen und besonders auch die durch seitenständige Substituenten an der $-(C_2H_3RO)_n$-Kette der aus Ethylenoxid, Propylenoxid und ggf. Butylenoxid aufgebauten Copolymeren) noch eine Vielzahl technischer Probleme nicht optimal gelöst ist. Interessant ist in diesem Zusammenhang, daß generell die verwendeten Siliconpolyethercopolymere nach dem Stand der Technik einheitlich aufgebaute Polyetherketten als Backbone enthalten. Damit ist die Tatsache gemeint, daß die Strukturen aus gleichartigen Bausteinen, wie z. B. gegebenenfalls substituierten Epoxiden, aufgebaut sind. Demzufolge werden zwar Ethylenoxid, Propylenoxid, Butylenoxid und auch Epoxide längerketter Olefine verwendet, die Grundstruktur der eigenschaftsbestimmenden Polyetherkette ist aber in allen diesen Fällen die regelmäßige Abfolge eines Sauerstoffatomes und zweier Kohlenstoffatome entlang der Kette.

Durch die Zahl und Länge der seitlichen Substituenten an dem Polyether-Rückgrat (Verwendung von Propylenoxid oder Butylenoxid) werden dann Eigenschaften wie z. B. die Oberflächenspannung einer Mischung mit einem Verschäumungspolyol beeinflußt. Trotzdem sind noch nicht alle Anforderungen an das Eigenschaftsbild von Polyurethanschäumen erfüllt.

So hat z. B. im Zuge der Weiterentwicklung von Verschäumungstechnologien bei der Herstellung von Polyurethanweichschäumen z. B. der Einsatz von unter Druck verflüssigten Gasen als Treibmittel gezeigt, daß Anforderungen an die Feinzelligkeit der entstehenden Schäume, wie z. B. in US-A-5 306 737 durch erhöhte Propylenoxidanteile in den verwendeten Polyalkylenoxidcopolymereinheiten erreicht, an Wichtigkeit zunehmen.

Der vorliegenden Erfindung liegt die Aufgabe zugrunde, Substanzen mit tensidischen Eigenschaften zu finden, die eine besonders gute Kompatibilisierung zwischen unterschiedlich polaren Bestandteilen einer Mischung oder Reaktionsformulierung bewirken.

Überraschend wurde nun gefunden, daß diese Forderung durch Verwendung von Siliconpolyethercopolymeren, deren Polyethercopolymereinheit ganz oder teilweise aus ggf. substituierten $(C_2H_3RO)$- und $(C_4H_7RO)$-Bausteinen zusammengesetzt ist, erfüllt wird. Dabei ist ausdrücklich das Polyether-Bauprinzip als regelmäßige Abfolge gleichartiger Baueinheiten (bei Stabilisatoren nach dem Stand der Technik normalerweise C-C-O-Einheiten) durchbrochen. Das geschieht durch die Verwendung von verschiedenen "Rückgrat-Einheiten"-(C-C-O)- und -(C-C-C-C-O)- als Bestandteil des Polyether-Backbones. Derartige Polyether als Copolymere aus Epoxiden und Tetrahydrofuran-Strukturen werden auch im Gegensatz zu den reinen Epoxidpolyethern nicht durch basenkatalysierte Polymerisation, sondern im Gegenteil unter sauren Bedingungen hergestellt.

Es zeigt sich, daß die Verwendung von Tetrahydrofuran-Einheiten in Siloxan-Polyoxyalkylen-Copolymeren eine hervorragende Möglichkeit zur Anpassung der Eigenschaften an die Erfordernisse der Polyurethanverschäumung ermöglicht. Bei diesen Copolymeren aus ggf. alkylsubstituierten Ethylenoxiden und ggf. substituierten Tetrahydrofuran-Bausteinen ist es überraschenderweise möglich, sehr feinzellige und trotzdem stabile Polyurethanschäume herzustellen. Dabei haben selbst in bezug auf das gesamte Molekulargewicht der Silicon-Polyether-Copolymeren vergleichweise niedrige Mengen an ($C_4H_7RO$)-Gruppen enthaltenden Polyethern erstaunlich deutliche Effekte.

Gegenstand der Erfindung sind somit Blockcopolymere der allgemeinen durchschnittlichen Formel:

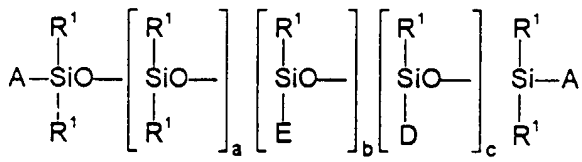

wobei

A = Rest $R^1$, Rest D oder Rest E ist,

$R^1$ = Alkylrest mit 1 bis 30 Kohlenstoffatomen, substituierter Alkylrest, gegebenenfalls substituierter Arylrest oder gegebenenfalls substituierter Alkarylrest, wobei jedoch mindestens 80 % der Reste $R^1$ Methylgruppen sind,

D = Rest der Formel

$$-R^2{}_f\text{-O-}(C_2H_{4-g}R^5{}_gO\text{-})_n(CH_2\text{-}CH_2\text{-}CH_2\text{-}CH_{2-i}R^6{}_i\text{-O-})_mR^3$$

wobei

- $R^2$ ein zweiwertiger Alkylenrest ist, der auch verzweigt sein kann,
- f einen Wert von 0 oder 1,
- g einen Wert von 0 bis 3,
- i einen Wert von 0 oder 1,
- m einen Wert von 1 bis 30,
- n einen Wert von 0 bis 100 hat und
- $R^3$ ein Wasserstoffrest, ein gegebenenfalls substituierter Alkylrest mit 1 bis 6 Kohlenstoffatomen, ein Acylrest oder ein -O-CO-NH-$R^4$-Rest ist, bei dem $R^4$ ein gegebenenfalls substituierter Alkyl- oder Arylrest,
- $R^5$ ein einwertiger, ggfs. auch verzweigter oder Ethergruppen enthaltender organischer Rest und
- $R^6$ ein Alkylrest mit 1 bis 6 Kohlenstoffatomen ist,

wobei mindestens ein Rest D pro durchschnittlichem Molekül ggfs. auch in Form des Restes A enthalten sein muß,

- a hat einen Wert von 3 bis 200,
- b hat einen Wert von 0 bis 50 und
- c hat einen Wert von 0 bis 50,
- E die Bedeutung

a) eines Restes der allgemeinen Formel

$$-R^2{}_f\text{-O-}(C_2H_{4-g}R^5{}_gO\text{-})_nR^3$$

und/oder
b) eines epoxyfunktionalisierten, gegebenenfalls Heteroatome enthaltenden Alkylsubstituenten und/oder
c) eines Mono-, Di- und Trihydroxyalkylsubstituenten, der auch aromatisch oder verzweigt und partiell oder vollständig verethert oder verestert sein kann,
und/oder
d) eines halogen- oder pseudohalogensubstituierten Alkyl-, Aryl- oder Aralkylrestes, der gegebenenfalls auch verzweigt sein kann, hat.

Beispiele für den Rest E in den aufgeführten Bedeutungen sind z. B. Anlagerungsprodukte von Allylglycidylether, Trimethylolpropanmonoallylether oder Allylchlorid.

Dabei können auch verschiedene Substituenten in Kombination eingesetzt werden, wie z. B. für Polyethersubstituenten in der DE-C-42 29 402 beschrieben. Die Substituenten können sich gegebenenfalls unterscheiden z. B. in ihrer Molmasse, bei Polyethern evtl. in ihrer Endgruppe $R^3$ oder den Anteilen der verwendeten Monomeren, der Art der Monomeren etc.

Als besonders geeignet haben sich Siliconpolyethercopolymere erwiesen, die durch Kombinationen von zwei oder mehr verschiedenen Polyethercopolymereinheiten mit einem oder mehreren Siliconpolymeren erhalten werden. Dabei kann die Unterscheidung im Falle der Polyethercopolymeren sowohl eine Unterscheidung in bezug auf den relativen Anteil der für die Herstellung dieses Copolymeren verwendeten Bausteine sein, als auch im Molekulargewicht der gesamten Polyetherkette, als auch in ihrer Funktionalität begründet liegen. Verschiedene Siloxancopolymere sind unterscheidbar sowohl nach ihrer Molmasse als auch ihrem Verzweigungsgrad oder der Anzahl bzw. relativen Stellung der verwendeten reaktiven Gruppen, die für eine Verknüpfung zur Verfügung stehen. Die Verknüpfung der entsprechenden Silicone mit den zu verwendenden Polyoxyalkylencopolymeren kann entweder durch eine Hydrosilylierung von ungesättigten Polyethercopolymeren als auch durch eine Umsetzung unter Bildung von SiOC-Verknüpfung mit hydroxyfunktionellen Polyoxyalkylencopolymeren erfolgen.

Um das Bauprinzip der beanspruchten Verbindungen zu demonstrieren, werden beispielhaft die folgenden Siloxan/Polyetherkombinationen nach literaturbekannten Verfahren umgesetzt:

Si 1) $(CH_3)_3SiO\text{-}[(CH_3)_2SiO\text{-}]_{58}[(CH_3)HSiO\text{-}]_6Si(CH_3)_3$
Si 2) $(CH_3)_3SiO\text{-}[(CH_3)_2SiO\text{-}]_{120}[(CH_3)HSiO\text{-}]_{10}Si(CH_3)_3$
Si 3) $(CH_3)_3SiO\text{-}[(CH_3)_2SiO\text{-}]_5[(CH_3)HSiO\text{-}]_5Si(CH_3)_3$
Si 4) $(CH_3)_3SiO\text{-}[(CH_3)_2SiO\text{-}]_{20}[(CH_3)HSiO\text{-}]_5Si(CH_3)_3$
Si 5) $(CH_3)_2HSiO\text{-}[(CH_3)_2SiO\text{-}]_{58}[(CH_3)HSiO\text{-}]_6SiH(CH_3)_2$
Si 6) $(CH_3)_3SiO\text{-}[(CH_3)_2SiO\text{-}]_{58}[(CH_3)HSiO\text{-}]_{20}Si(CH_3)_3$
Si 7) $(CH_3)_2HSiO\text{-}[(CH_3)_2SiO\text{-}]_{58}SiH(CH_3)_2$
PE a) $CH_2{=}CH\text{-}CH_2O\text{-}(C_2H_4O\text{-})_{16}(C_3H_6O\text{-})_{12}CH_3$, Rest-OH-Zahl < 2
PE b) $CH_2{=}CH\text{-}CH_2O\text{-}(C_2H_4O\text{-})_{45}(C_3H_6O\text{-})_{34}CH_3$, Rest-OH-Zahl < 5
PE c) $CH_2{=}CH\text{-}CH_2O\text{-}(C_2H_4O\text{-})_5(C_4H_8O\text{-})_9CH_3$, Rest-OH-Zahl < 2
PE d) $CH_2{=}CH\text{-}CH_2O\text{-}(C_2H_4O\text{-})_4(C_3H_6O\text{-})_{10}(C_4H_8O\text{-})_9CH_3$, Rest-OH-Zahl < 3
PE e) $CH_2{=}CH\text{-}CH_2O\text{-}(C_2H_4O\text{-})_5(C_3H_6O\text{-})_{21}CH_3$, Rest-OH-Zahl < 2
PE f) $CH_2{=}CH\text{-}CH_2O\text{-}(C_2H_4O\text{-})_{45}(C_3H_6O\text{-})_{34}H$
PE g) $CH_2{=}CH\text{-}CH_2O\text{-}(C_2H_4O\text{-})_5(C_4H_8O\text{-})_9COCH_3$, Rest-OH-Zahl < 2
PE h) $CH_2{=}CH\text{-}CH_2O\text{-}(C_2H_4O\text{-})_9(C_4H_8O\text{-})_9CH_3$, Rest-OH-Zahl < 3
PE i) $CH_2{=}CH\text{-}CH_2O\text{-}(C_3H_6O\text{-})_{10}(C_4H_8O\text{-})_9CH_3$, Rest-OH-Zahl < 3
PE k) $CH_2{=}CH\text{-}CH_2O\text{-}(C_2H_4O\text{-})_{15}COCH_3$, Rest-OH-Zahl < 2
PE l) $CH_2{=}CH\text{-}CH_2O\text{-}(C_2H_4O\text{-})_{15}H$

Dabei werden entsprechend der folgenden Tabelle die beschriebenen Siliconpolyether-Copolymeren erhalten.

| Beispiel | Siloxan | PE 1 (val%) | PE 2 (val%) | PE 3 (val%) | PE 4 (val%) |
|---|---|---|---|---|---|
| 1 (-) | 1 | a (65) | b (35) | | |
| 2 (+) | 1 | a (40) | b (35) | c (25) | |
| 3 (+) | 1 | a (55) | b (35) | c (10) | |
| 4 (+) | 1 | a (40) | b (35) | d (25) | |
| 5 (-) | 1 | a (30) | e (35) | f (35) | |
| 6 (+) | 1 | a (20) | c (10) | e (35) | f (35) |
| 7 (+) | 2 | a (40) | b (35) | d (25) | |
| 8 (+) | 3 | g (45) | f (55) | | |
| 9 (+) | 4 | h (20) | b (40) | k (40) | |
| 10 (+) | 5 | i (25) | k (25) | a (50) | |
| 11 (+) | 5 | a (40) | b (35) | c (25) | |
| 12 (+) | 6 | c (70) | k (30) | | |
| 13 (+) | 7 | i (50) | l (50) | | |

In dieser Tabelle sind erfindungsgemäße Beispiele durch ein (+) hinter der Beispielnummer gekennzeichnet, während nicht erfindungsgemäße Vergleichsprodukte durch ein (-) charakterisiert werden.

Die Herstellung der Verbindungen erfolgt nach allgemein üblichen Herstellungsverfahren, z. B. nach folgender Vorschrift: In einem mit Rührer, Thermometer, Gaseinleitung und Rückflußkühler versehenen Kolben werden die Siloxane, Polyether und gegebenenfalls Lösungsmittel vorgelegt. Durch die Apparatur wird Stickstoff geleitet, und unter Rühren wird der Kolbeninhalt auf 105 °C aufgeheizt. Bei 105 °C wird der Ansatz mit einer 10 %igen Lösung von $H_2PtCl_6 \cdot 6H_2O$ in i-Propanol versetzt (ca. 0,6 g pro 1000 g Ansatz). Es setzt eine exotherme Reaktion ein. Dabei treten, abhängig von den Edukten, Temperaturerhöhungen von 10 bis 30 °C auf. Man läßt die Ansätze abreagieren und erreicht SiH-Umsätze von ≥ 97 % (bestimmt über in alkalischem Medium mit n-Butanol abspaltbarem Wasserstoff). Während der Reaktion wird der zunächst trübe Kolbeninhalt klar. Die Reaktionszeiten betragen in der Regel 1 bis 8 Stunden. Die Polyether werden im Überschuß eingesetzt (35 %). Als Lösungsmittel können solche eingesetzt werden, die nach der Reaktion abdestilliert werden können (z. B. Toluol, Xylol) oder solche, die nach der Reaktion im Endprodukt verbleiben können (z. B. Dipropylenglykol, Di- und Tripropylenglykolmono-n-butylether, doppelbindungsfreie Polyether).

Zur Demonstration der Eigenschaftensänderungen der erfindungsgemäßen Tetrahydrofuran-Polyether-haltigen Siliconpolyethercopolymeren gegenüber nicht erfindungsgemäßen Vergleichsprodukten können die Produkte z. B. in einer Polyurethanformulierung als Schaumstabilisatoren getestet werden. Bei den erfindungsgemäßen Beispielen 2 bis 4 und 6 z. B. ist jeweils ein Teil der EO/PO-Polyether aus dem Vergleichsbeispiel 1 bzw. 5 durch die der Erfindung zugrunde liegenden THF/Epoxid-Copolymere (THF-haltige Polyether) ersetzt. Dabei werden sowohl unterschiedliche Mengen an THF-haltigen Polyethern als auch Polyether mit unterschiedlichem THF-Gehalt eingesetzt.

Die Testformulierung basiert auf 100 Teilen eines Polyols (OHZ = 46, 11 % EO), 5 Gew.-Teilen Wasser, 0,15 Gew.-Teilen tert. Amin, 0,23 Gew.-Teilen Zinnoctoat, 5 Gew.-Teilen eines physikalischen Treibmittels, 63,04 Gew.-Teilen Toluoldiisocyanat T80 und 0,5 bzw. 0,6 Gew.-Teilen des zu testenden Copolymers. Bei der Verschäumung werden 300 g Polyol eingesetzt, die anderen Formulierungsbestandteile werden entsprechend umgerechnet.

Zum Austesten des Additivs als Stabilisator werden Polyol, Wasser, Amin, Zinnoctoat, Stabilisator und Treibmittel unter gutem Rühren vermischt. Nach Zugabe des Isocyanates wird mit einem Glattrührer 7 Sek. bei 3000 U/Min. gerührt und das Gemisch in einen mit Papier ausgekleideten Holzkasten (Grundfläche 27 cm x 27 cm) gegossen. Zum Austesten des Additivs in bezug auf andere Eigenschaften, z. B. als Zellregulator oder zur Verbesserung der Luftdurchlässigkeit des Schaumes, kann natürlich auch ein anderer Stabilisator mitverwendet werden. Es entsteht ein Schaumstoff, von dem folgende Daten zur Beurteilung des eingesetzten Additives gemessen werden:

1. Das Rücksacken des Schaumstoffes am Ende der Steigphase (in der nachfolgenden Tabelle mit Rückfall angegeben).
2. Die Zahl der Zellen pro Zentimeter Schaum werden unter einem Mikroskop ausgezählt.
3. Die Luftdurchlässigkeit des Schaumes wird durch eine Staudruckmessung am Schaumstoff ermittelt. Der gemessene Staudruck wird in mm Wassersäule angegeben, wobei dann die niedrigeren Staudruckwerte den offeneren Schaum charakterisieren.

Es werden die folgenden anwendungstechnischen Werte ermittelt, angegeben sind jeweils die Werte bei Einsatz von 0,6/0,5 Gew.-Teilen des Copolymers:

| Beispiel | Rückfall [cm] | Staudruck [mm] | Zellen pro cm |
|---|---|---|---|
| 1 (-) | 0/0 | 34/39 | 13/13 |
| 2 (+) | 0/0 | 32/36 | 15/14 |
| 3 (+) | 0/0 | 37/30 | 14/14 |
| 4 (+) | 0/0 | 40/31 | 13/14 |
| 5 (-) | 0/0 | 46/46 | 14/14 |
| 6 (+) | 0/0 | 22/23 | 14/14 |

Der Vergleich der erfindungsgemäßen Verbindungen 2, 3 und 4 mit dem Vergleichsprodukt 1 demonstriert die Verbesserung der Zellfeinheit durch Verwendung der THF/Epoxid-Mischpolymere als Bestandteile von Siliconpolyethercopolymeren. Besonders bemerkenswert ist die Tatsache, daß bei praktisch unveränderter Luftdurchlässigkeit der entstehenden Schäume trotz der verbesserten Zellfeinheit keine Verminderung der Schaumausbeute zu beobachten ist. Wie der Vergleich der Beispiele 5 und 6 zeigt, ist es auch möglich, mit den erfindungsgemäßen Verbindungen Schäume verbesserter Offenzelligkeit ohne Verminderung der Schaumstabilität oder der Zellfeinheit herzustellen.

## Patentansprüche

**1.** Blockcopolymere der allgemeinen durchschnittlichen Formel

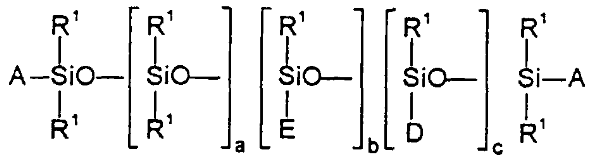

wobei

A = Rest $R^1$, Rest D oder Rest E ist,
$R^1$ = Alkylrest mit 1 bis 30 Kohlenstoffatomen, substituierter Alkylrest, gegebenenfalls substituierter Arylrest oder gegebenenfalls substituierter Alkarylrest, wobei jedoch mindestens 80 % der Reste $R^1$ Methylgruppen sind,
D = Rest der Formel

$$-R^2{}_f\text{-O-}(C_2H_{4-g}R^5{}_gO\text{-})_n(CH_2\text{-}CH_2\text{-}CH_2\text{-}CH_{2-i}R^6{}_i\text{-O-})_mR^3$$

wobei

$R^2$ ein zweiwertiger Alkylenrest ist, der auch verzweigt sein kann,
f einen Wert von 0 oder 1,
g einen Wert von 0 bis 3,
i einen Wert von 0 oder 1,
m einen Wert von 1 bis 30,
n einen Wert von 0 bis 100 hat und
$R^3$ ein Wasserstoffrest, ein gegebenenfalls substituierter Alkylrest mit 1 bis 6 Kohlenstoffatomen, ein Acylrest oder ein -O-CO-NH-$R^4$-Rest ist, bei dem $R^4$ ein gegebenenfalls substituierter Alkyl- oder Arylrest,
$R^5$ ein einwertiger, ggfs. auch verzweigter oder Ethergruppen enthaltender organischer Rest und
$R^6$ ein Alkylrest mit 1 bis 6 Kohlenstoffatomen ist,

wobei mindestens ein Rest D pro durchschnittlichem Molekül ggfs. auch in Form des Restes A enthalten sein muß,

a hat einen Wert von 3 bis 200,
b hat einen Wert von 0 bis 50 und
c hat einen Wert von 0 bis 50,
E die Bedeutung

a) eines Restes der allgemeinen Formel

$$-R^2{}_f\text{-O-}(C_2H_{4-g}R^5{}_gO\text{-})_nR^3$$

und/oder
b) eines epoxyfunktionalisierten, gegebenenfalls Heteroatome enthaltenden Alkylsubstituenten und/oder
c) eines Mono-, Di- und Trihydroxyalkylsubstituenten, der auch aromatisch oder verzweigt und partiell oder vollständig verethert oder verestert sein kann, und/oder
d) eines halogen- oder pseudohalogensubstituierten Alkyl-, Aryl- oder Aralkylrestes, der gegebenenfalls auch verzweigt sein kann, hat.

**2.** Verwendung der Blockcopolymeren gemäß Anspruch 1 als tensidisch wirksame Substanzen.

**3.** Verwendung der Blockcopolymeren gemäß Anspruch 1 als Additiv bei der Herstellung von Polyurethanschäumen.

## Claims

**1.** Block copolymers of the general average formula

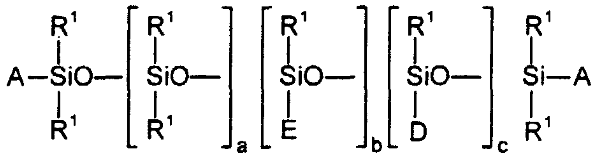

where

A = radical $R^1$, radical D or radical E,

$R^1$ = alkyl radical having from 1 to 30 carbon atoms, substituted alkyl radical, unsubstituted or substituted aryl radical or unsubstituted or substituted alkaryl radical, but with at least 80% of the radicals $R^1$ being methyl groups,

D = radical of the formula

$$-R^2{}_f\text{-O-}(C_2H_{4-g}R^5{}_gO\text{-})_n(CH_2\text{-}CH_2\text{-}CH_2\text{-}CH_{2-i}R^6{}_i\text{-O-})_mR^3$$

where

$R^2$ is a divalent alkylene radical which may also be branched,

f is 0 or 1,
g is from 0 to 3,
i is 0 or 1,
m is from 1 to 30,
n is from 0 to 100 and

$R^3$ is hydrogen, an unsubstituted or substituted alkyl radical having from 1 to 6 carbon atoms, an acyl radical or a -O-CO-NH-$R^4$ radical in which $R^4$ is an unsubstituted or substituted alkyl or aryl radical,
$R^5$ is a monovalent organic radical which may also be branched or contain ether groups and
$R^6$ is an alkyl radical having 1 to 6 carbon atoms,
where at least one radical D has to be present in the average molecule, possibly in the form of the radical A,

a is from 3 to 200,
b is from 0 to 50 and
c is from 0 to 50,
E is

a) a radical of the general formula

$$-R^2{}_f\text{-O-}(C_2H_{4-g}R^5{}_gO\text{-})_nR^3$$

and/or
b) an epoxy-functionalized alkyl substituent which may contain heteroatoms
and/or
c) a monohydroxyalkyl, dihydroxyalkyl or trihydroxyalkyl substituent which may also be aromatic or branched and partially or fully etherified or esterified, and/or
d) a halogen- or pseudohalogen-substituted alkyl, aryl or aralkyl radical which may also be branched.

**2.** Use of the block copolymers according to Claim 1 as surface-active substances.

**3.** Use of the block copolymers according to Claim 1 as additive in the production of polyurethane foams.

## Revendications

**1.** Copolymères blocs de formule moyenne générale

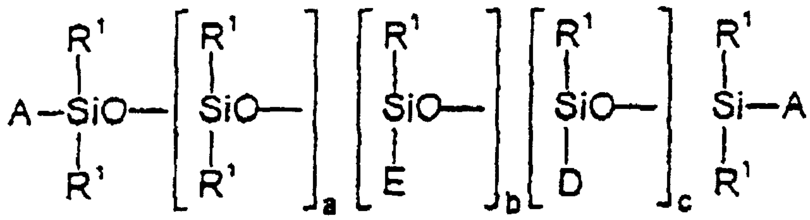

dans laquelle

A = un radical $R^1$, un radical D ou un radical E,
$R^1$ = un radical alkyle ayant de 1 à 30 atomes de carbone, un radical alkyle substitué, un radical aryle éventuellement substitué ou un radical alkaryle éventuellement substitué, au moins 80% des radicaux $R^1$ étant toutefois des groupes méthyle,
D = un radical de formule

$$-R^2_f-O-(C_2H_{4-g}R^5_gO-)_n(CH_2-CH_2-CH_2-CH_{2-i}R^6_i-O-)_mR^3$$

dans laquelle

$R^2$ est un radical alkylène bivalent qui peut être également ramifié,
f vaut 0 ou 1,
g vaut de 0 à 3,
i vaut de 0 à 1,
m vaut de 1 à 30,
n vaut de 0 à 100, et
$R^3$ est un radical hydrogène, un radical alkyle éventuellement substitué ayant de 1 à 6 atomes de carbone, un radical acyle ou un radical $-O-CO-NH-R^4-$, dans lequel $R^4$ est un radical alkyle ou aryle éventuellement substitué,
$R^5$ est un radical organique monovalent, éventuellement également ramifié ou renfermant des groupes éther, et
$R^6$ est un radical alkyle ayant de 1 à 6 atomes de carbone,

où au moins un radical D doit être présent par molécule moyenne éventuellement sous la forme du radical A,

a vaut de 3 à 200,
b vaut de 0 à 50 et
c vaut de 0 à 50,
E représente

a) un radical de formule générale

$$-R^2_f-O-(C_2H_{4-g}R^5_gO-)_nR^3$$

et/ou
b) un substituant alkyle à fonction époxy, renfermant éventuellement des hétéro-atomes,
et/ou
c) un substituant mono-, di- et trihydroxyalkyle qui peut être également aromatique ou ramifié et partiellement ou totalement éthérifié ou estérifié, et/ou
d) un radical alkyle, aryle ou aralkyle halogéno- ou pseudo-halogéno substitué qui peut éventuellement être ramifié.

**2.** Utilisation des copolymères blocs selon la revendication 1 en tant que substances à action tensioactive.

**3.** Utilisation des copolymères blocs selon la revendication 1 en tant qu'additif lors de la préparation de mousses de polyuréthane.